# EUROPÄISCHE PATENTSCHRIFT

(11) **EP 3 569 297 B1**
(45) Veröffentlichungstag und Bekanntmachung des Hinweises auf die Patenterteilung: **12.08.2020**
(21) Anmeldenummer: 19174616.3
(22) Anmeldetag: 15.05.2019
(51) Int. Cl.: B01D 3/02, B01L 3/16, B01L 3/00, G01K 1/14

(54) **STOPFEN FÜR AUTOMATISCHE DESTILLATIONSMESSUNGEN**
STOPPER FOR AUTOMATIC DISTILLATION MEASUREMENTS
BOUCHON POUR MESURES DE DISTILLATION AUTOMATIQUE

(30) Priorität: 16.05.2018 DE 102018111790
(43) Veröffentlichungstag der Anmeldung: 20.11.2019
(73) Patentinhaber: Anton Paar ProveTec GmbH, 15827 Blankenfelde-Mahlow (DE)
(72) Erfinder: Zimmermann, Frank, 15566 Schöneiche (DE); Kindt, Carsten, 12247 Berlin (DE); Pergande, Daniel, 14513 Teltow (DE)
(74) Vertreter: Dilg, Haeusler, Schindelmann Patentanwaltsgesellschaft mbH

(56) Entgegenhaltungen:
- EP-A1- 2 075 058
- CH-A5- 568 570
- DE-A1- 3 709 739
- DE-B- 1 281 190
- US-A1- 2015 185 093

## Beschreibung

### Gebiet der Erfindung

Die vorliegende Erfindung betrifft eine Vorrichtung zum Verschließen eines Behälters für eine Flüssigkeit zum Bestimmen von Verdampfungseigenschaften der Flüssigkeit gemäß zumindest einem standardisierten Test und betrifft ferner ein Flüssigkeitsanalysesystem, insbesondere eine Automatische Destillations-Einheit zum Analysieren einer Flüssigkeit, insbesondere gemäß zumindest einem standardisierten Test.

### Hintergrund

Die vorliegende Erfindung liegt im Gebiet der Automatischen (oder Atmosphärischen) Destilliereinheiten (ADU), mit denen gemäß verschiedenen Normen (z.B. ASTM D86) das Siedeverhalten von Flüssigkeiten, insbesondere von Erdölprodukten oder Lösemitteln, bestimmt werden kann. Dabei wird ein genormtes Probengefäß, der sogenannte Kolben, von unten beheizt und das dabei entstehende Destillat wird über einen Verflüssiger bzw. Kondensator in ein Auffanggefäß abgeführt. Das Destillationsverhalten der Flüssigkeit wird u.a. mittels einer Temperaturmessung charakterisiert.

Beispielsweise müssen Mineralölerzeugnisse, die aus Mineralöl durch fraktionierte Destillation erhalten worden sind, zu Qualitätsüberprüfungen standardisierten Tests (z.B. gemäß den Normen ASTM D975 und EN 590 für Dieselöl und ASTM D4814 und EN 228 für Benzin) unterzogen werden. Um vergleichbare Testresultate zu erhalten, ist es notwendig, Tests gemäß den Normen ASTM D86/ISO 3405 durchzuführen, um den Raffinierungsprozess zu kontrollieren und die Endprodukte zu zertifizieren.

Lösungsmittel werden in Raffinerien und petrochemischen Anlagen hergestellt und werden z.B. zum Dispergieren von Pigmenten in Farbe verwendet. Um die Destillationseigenschaften von Lösungsmitteln mit einem relativ breiten Siedebereich, wie etwa Gasolin, zu bestimmen wird ASTM D86 angewendet. Um die Reinheit von Lösungsmitteln zu bestimmen, werden u.a. ASTM D850 für organische Flüssigkeiten und ASTM D1078 für aromatische Kohlenwasserstoffe verwendet.

US 6,581,443 B2 offenbart einen Prozess zum Bestimmen der Destillationscharakteristik von flüssigen Mineralölprodukten. Eine Probe in einem Destillationsbehälter wird geheizt, währenddessen die Temperatur der Probe sowohl in der flüssigen Phase als auch in der Dampfphase gemessen wird. Ferner wird der Druck in der Dampfphase der Probe im Verlauf der Destillation kontinuierlich gemessen.

CN 203763880 U offenbart eine Vakuumdestillationseinheit mit einem Destillationsbehälter, einem ersten Gummistopfen, einem Thermometer, welches an dem ersten Gummistopfen installiert ist und sich in den Destillationsbehälter erstreckt, einem zweiten Gummistopfen, einer Kapillarglasröhre, welche an dem zweiten Gummistopfen installiert ist und sich in den Installationsbehälter erstreckt. Ein Ende eines Thermometers erstreckt sich in den Destillationsbehälter und ein Ende der Kapillarglasröhre erstreckt sich in den Destillationsbehälter nahe einer Seitenwand.

CN 202315368 U offenbart ein negativer-Druck-Auszugs(stripping)-Gerät, welches einen Destillationsbehälter, eine Heizkette, sowie ein Thermometer umfasst, welches an einem Gummistopfen eingeführt ist. Der Druck innerhalb des Destillationsbehälters kann vermindert werden, um ein Explodieren des Aufnahmebehälters zu verhindern.

GB 904960 A offenbart einen Apparat zur Benutzung in der Steuerung einer Destillation und zum Bestimmen der Destillationscharakteristik einer Flüssigkeitsmischung, wie etwa Mineralöl. Ein Behälter ist mit einer elektrischen Heizung und mit einem Thermoelement ausgestattet. Die mit dem Thermoelement gemessene Temperatur wird in einem Temperatur-Zeit-Graphen aufgezeichnet.

DE 1498555 A1 offenbart einen Destillierautomat zur zeitabhängigen Messung und Aufzeichnung der Siedetemperaturen von Flüssigkeitsproben. Ein Thermoelement ist an dem Boden des Behälters lokalisiert, um einen Spitzenwert der Temperatur beim Endpunkt der Destillation bestimmen zu können. Ferner steht ein Thermoelement mit einem Schreiber zur Aufzeichnung der Dampftemperatur in Verbindung.

Ferner offenbaren CH568570A, DE3709739A und DE1281190B noch Stopfen mit verstellbaren Temperaturmessfühlern.

Gemäß dem Stand der Technik wird ein Destillationsbehälter oder Kolben mittels eines Stopfens verschlossen, durch den ein oder zwei Temperaturmesselemente geführt sind. Zum Beispiel kann ein Pt100-Temperatursensor durch den Stopfen geführt sein und im oberen Bereich des Kolbens die Dampftemperatur der zu untersuchenden Probe messen. Ferner kann ein Trockenpunktsensor ebenfalls durch den Stopfen geführt sein, bis seine untere Spitze den Boden des Kolbens berührt. Dieser zweite Temperatursensor kann den Zeitpunkt erkennen, bei dem der letzte Rest der Probe von dem Boden des Behälters verdampft ist.

Gemäß dem Stand der Technik muss ein Bediener der Anlage die Temperatursensoren manuell durch den Stopfen einführen und Kabel an einem Auswertegerät anschließen. Ferner müssen vor Beginn der Messung die Sensoren kalibriert werden. Diese Arbeitsschritte sind fehleranfällig und aufwendig und können zu Fehlmessungen führen.

Somit ist es eine Aufgabe der vorliegenden Erfindung, ein sicheres Handhaben des Kolbens samt dem Stopfen zu ermöglichen und ferner die Handhabung der Temperatursensoren zu vereinfachen. Ferner ist es eine Aufgabe der vorliegenden Erfindung, die Zuverlässigkeit und Sicherheit der Messung sowie der zu der Messung verwendeten Komponenten zu verbessern, insbesondere eine zuverlässige mechanische Abstützung des Behälters zu erreichen.

Die Aufgabe wird durch den Gegenstand des unabhängigen Anspruchs 1 gelöst, welcher auf eine Vorrichtung zum Verschließen eines Behälters gerichtet ist. Ferner wird die Aufgabe durch ein beanspruchtes Flüssigkeitsanalysesystem, insbesondere eine Automatische Destillations-Einheit gelöst, welches die Vorrichtung zum Verschließen eines Behälters umfasst.

Gemäß einer Ausführungsform der vorliegenden Erfindung ist eine Vorrichtung zum Verschließen eines Behälters, insbesondere Kolbens, für eine Flüssigkeit zum Bestimmen von Verdampfungseigenschaften der Flüssigkeit gemäß zumindest einem standardisierten Test bereitgestellt, aufweisend: zumindest ein Temperaturmesssystem, insbesondere zum Messen einer Dampftemperatur der Flüssigkeit, mit einem Temperaturmessfühler mit einem unteren Ende; einen Verschlussteil mit einer, insbesondere konisch ausgebildeten, Außenoberfläche, die zum Kontaktieren einer, insbesondere inneren, Oberfläche einer Öffnung des Behälters zum (z.B. dampfdichten) Verschließen des Behälters ausgebildet ist und mit einer Durchgangsöffnung, durch die ein Teil des Temperaturmessfühlers derart geführt ist, dass das untere Ende des Temperaturmessfühlers innerhalb des Behälters angeordnet ist; einen Mechanismus, insbesondere einen Schraubmechanismus, zum Verstellen einer (z.B. vertikalen) Position des unteren Endes des Temperaturmessfühlers entlang einer Längsrichtung des Temperaturmessfühlers; einen oberhalb des Verschlussteils quer zur Längsrichtung des Temperaturmessfühlers über den Verschlussteil und/oder Mittelteil hervorragenden Stützteil, der mit einem Gegenstück einer Hilfsvorrichtung ineinanderschiebbar ist, wobei der Stützteil oder das Gegenstück als Steckelement und der Stützteil oder das Gegenstück als hülsenförmiges Element ausgeführt sind.

Gemäß alternativen Ausführungsformen kann der Mechanismus zum Verstellen einer Position des unteren Endes des Temperaturmessfühlers entlang einer Längsrichtung eine Kombination aus einer Zahnstange und einem Zahnrad umfassen. In einer weiteren, alternativen Ausführungsform kann der Mechanismus auch eine Kombination aus einem Hebel mit einer Schubstange umfassen.

Gemäß genau vorgeschriebenen Richtlinien in dem anwendbaren Standardtest wird gemäß Ausführungsformen der Erfindung ein vorgegebenes Volumen einer Probe in den Probenbehälter (z.B. Kolben) gefüllt und der Probenbehälter mit der Vorrichtung zum Verschließen verschlossen. Die Probe wird dann unter definierten Bedingungen geheizt, so dass Teile der Probe verdampfen. Der Dampf wird in einer Kondensatorlinie gekühlt und das Kondensat wird in einem Zylinder gesammelt. Während der Durchführung des Tests werden mittels des
Temperaturmesssystems die Temperatur des Dampfes und die Zeit aufgezeichnet. Als Ergebnisse eines standardisierten Automatischen Destillations-Tests können z.B. die folgenden Parameter erhalten werden:
- Anfänglicher Siedepunkt, d.h. die Temperatur, bei der der erste Tropfen eines Destillats in den Aufnahmezylinder fällt
- Endsiedepunkt, d.h. die maximale Temperatur während der Destillation
- Das gesamte in dem Empfangszylinder aufgefangene Volumen des Destillats
- Der in dem Destillationsbehälter verbleibende Rest der Probe
- Trockenpunkt, d.h. die Temperatur, bei der der letzte Tropfen des Destillats von dem Boden des Behälters verdampft
- Destillationskurve.

Die Destillationskurve kann erhalten werden, indem die Temperatur gegen das relative Rückgewinnungsvolumen im Aufnahmezylinder aufgetragen wird. Aus der Destillationskurve kann z.B. der Siedebereich der Probe als die Differenz zwischen der maximalen Temperatur und der minimalen Temperatur abgeleitet werden.

Insbesondere sind Ausführungsformen der vorliegenden Erfindung geeignet für ein Durchführen von Standardtests für die Destillation von Petroleumprodukten, wie etwa ASTM D86 (Gruppen 0 bis 4), ISO3405, IP123, BS2000-123, jeweils in der am Anmeldetag gültigen Version.

Ausführungsformen der vorliegenden Erfindung sind ferner geeignet, Standardtests für die Destillation von Lösungsmitteln durchzuführen, etwa ASTM D1078, IP 95, BS2000-195, ASTM D850. Als Ergebnisse der Durchführung der Tests kann eine jeweilige Destillationskurve der untersuchten Probe, sowie z.B. der Trocknungspunkt erhalten werden. Die oben genannten Tests sind zu den jeweiligen am Anmeldetag gültigen Versionen der Standardtests durchführbar.
Ausführungsformen der vorliegenden Erfindung können z.B. eine standardisierte Untersuchung einer Probe mit einem Siedebereich zwischen z.B. 20°C und 400°C unterstützen. Insbesondere können die Standards ASTM D86, ASTM D850, ASTM D1078 unterstützt werden, sowie ISO 3405, IP 123, IP 195, alle jeweils in der am Anmeldetag gültigen Version. Die Spezifikationen für diese Standardtests können bei ASTM (z.B. www.ASTM.org) erhalten werden. Gemäß Ausführungsformen der vorliegenden Erfindung kann ein Dampftemperaturbereich von 0°C bis 450°C, ein Kondensatortemperaturbereich von 0°C bis 80°C und ein Kammertemperaturbereich von 0° bis 50° unterstützt werden. Ferner kann ein atmosphärischer Drucksensor in Ausführungsformen umfasst sein, welcher ermöglicht, die Ergebnisse automatisch auf einen Standarddruck korrigieren zu können.

Insbesondere sind Ausführungsformen der vorliegenden Erfindung zur Charakterisierung von Erdölprodukten ausgelegt, insbesondere verschieden von Entsalzungsanlagen für Meerwasser, Anlagen zur Trinkwasseraufbereitung, Reinigungsanlagen für Abwasser, chemischen Anlagen für die Behandlung von Kohlenwasserstoffen, Rotationsverdampfern, Destillationsanlagen für die Verarbeitung von biologischen Stoffen. Insbesondere stellen Ausführungsformen der vorliegenden Erfindung ein standardisiertes Destillationsgerät, insbesondere ein automatisches Destillationsgerät unter atmosphärischem Druck für flüssige Proben bereit, insbesondere für Proben von Mineralölprodukten, wobei die Messung von Destillationsparametern gemäß einem vordefinierten Teststandard durchgeführt wird, welcher von einer Mehrzahl von möglichen Standards ausgewählt ist, von denen oben einige Beispiele gegeben wurden. In einer alternativen Ausführungsform kann ein standardisiertes Destillationsgerät zur Messung von Destillationsparametern unter reduziertem Druck oder unter Vakuum zur Verfügung gestellt sein.

Bei dem Kolben kann es sich insbesondere um einen Glaskolben, insbesondere im Wesentlichen Kugelkolben handeln. Insbesondere unterhalb der Öffnung des Kolbens bzw. Behälters, kann ein Ausgang, etwa Glasröhre zu einer Kondensationseinheit führen. Insbesondere kann der Behälter, ferner insbesondere der Kolben, einer aus einer Gruppe standardisierter Behälter sein, welche kompatibel sind mit standardisierten Tests zur Charakterisierung von Verdampfungseigenschaften von Proben, wie oben in Beispielen ausgeführt ist.

Die Flüssigkeit kann z.B. ein Mineralölprodukt, z.B. Benzin, Diesel, Kerosin oder ähnliches, oder ein Lösungsmittel z.B. für die Farbenindustrie umfassen. Das Bestimmen von Verdampfungseigenschaften kann z.B. eine Verdampfungskurve oder die oben beispielhaft als Ergebnisse aufgezählten Größen umfassen. Der standardisierte Test kann einen der oben genannten Tests umfassen.

Das Temperaturmesssystem kann neben dem einen Temperaturmessfühler noch einen oder mehrere weitere Temperaturmessfühler umfassen, die z.B. an verschiedenen Stellen innerhalb des Behälters Temperaturmessungen durchführen können, z.B. innerhalb der Gasphase der Flüssigkeit oder innerhalb der Flüssigkeitsphase der Flüssigkeit.

Insbesondere kann der Temperaturmessfühler unter Benutzung des Schraubmechanismus derart in der (z.B. vertikalen) Position eingestellt werden, dass der Temperaturmessfühler die Dampftemperatur der teilweise verdampften Flüssigkeit unmittelbar vor Eintritt des Dampfes in den Kondensationszweig misst. Um insbesondere diese Position genau einstellen zu können, ist der Schraubmechanismus bereitgestellt. Der Temperaturmessfühler kann z.B. eingerichtet sein, die Temperatur über die Änderung eines Widerstandswertes eines Messwiderstandes in Abhängigkeit der Temperatur zu messen. Der Temperaturmessfühler kann z.B. ein Pt100-Messfühler sein bzw. diesen umfassen. Alternativ kann der Temperaturmessfühler andere Temperatursensoren umfassen.

Der Widerstands-basierte Temperaturmessfühler kann z.B. in Glas oder auch Metall eingebettet sein. Die Einbettung in Metall kann eine Reaktionszeit des Temperaturmessfühlers verkleinern, um somit die Messung zu verbessern.

Der Verschlussteil ist zum (z.B. in einem bestimmten Temperaturbereich und Druckbereich dampfdichten) Verschließen der Öffnung des Behälters ausgebildet. Dazu kontaktiert eine insbesondere konisch ausgebildete Außenoberfläche des Verschlussteils eine (z.B. eingeschliffene) innere (Glas-) Oberfläche der Öffnungswandung des Behälters. Bei den gemäß dem Test erreichten Temperaturen und Drücken verschließt das Verschlussteil den Behälter dampfdicht, so dass kein Dampf durch die Öffnung des Behälters aus dem Behälter austreten kann.

Der Verschlussteil weist mindestens eine Durchgangsöffnung auf, d.h. eine Öffnung, welche vollständig durch den Verschlussteil hindurchgeht, so dass die Durchgangsöffnung eine Öffnung zu einer unteren Stirnfläche des Verschlussteils hin aufweist sowie eine Öffnung an einer oberen Stirnseite des Verschlussteils aufweist.

Ein Teil des Temperaturmessfühlers ist vollständig von einer die Durchgangsöffnung begrenzenden (Innen-)Oberfläche des Verschlussteils umschlossen, insbesondere dampfdicht umschlossen, optional unter Verwendung von einer oder mehreren Dichtungsringen. Der Verschlussteil kann z.B. im Wesentlichen Zylindersymmetrie aufweisen und kann z.B. eine kegelförmig ausgebildete Außenoberfläche zum Kontaktieren einer kegelförmigen (Innen-)Oberfläche der Öffnungswandung des Behälters aufweisen. Eine Zylindersymmetrieachse kann z.B. genau durch die Durchgangsöffnung verlaufen. In anderen Ausführungsformen kann die Durchgangsöffnung versetzt aber parallel zu der Zylindersymmetrieachse der Außenoberfläche des Verschlussteils verlaufen. Der Verschlussteil kann aus einem Material gefertigt sein, welches einer hohen Dampftemperatur widersteht, etwa bis zu 450°C.

Ein anderer Teil des Temperaturmessfühlers kann innerhalb des Behälters angeordnet sein, wenn die Vorrichtung zum Verschließen einschließlich des Verschlussteils auf den Behälter aufgesetzt ist.

Gemäß dem Stand der Technik wurde ein Temperaturmessfühler innerhalb des Behälters positioniert, indem er manuell durch einen Verschlussstopfen bzw. einen Verschlussteil geführt wurde und manuell verschoben wurde, durch Ausübung von Zug bzw. Druck. Gemäß der vorliegenden Erfindung muss weder direkt (unmittelbar) ein Druck noch direkt ein Zug auf den Temperaturmessfühler ausgeübt werden, sondern der Temperaturmessfühler kann durch eine Schraubbewegung (z.B. Betätigung des Schraubmechanismus) in seiner (vertikalen) Position verändert werden. Dadurch ist eine Handhabung, insbesondere eine Einstellung einer für den standardisierten Test definierten Position des unteren Endes des Temperaturmessfühlers für einen Anwender vereinfacht. Insbesondere ist durch Ausführungsformen der vorliegenden Erfindung das Erfordernis vermieden, dass ein Benutzer den Temperaturfühler manuell durch einen Stopfen einführt.

Erfindungsgemäß ist der Temperaturmessfühler bereits vor Verschließen des Behälters durch die Durchgangsöffnung geführt. Lediglich die Einstellung der vertikalen Position des unteren Endes Temperaturmessfühlers durch Betätigung des Schraubmechanismus ist erforderlich, um eine Konfiguration gemäß einem standardisierten Test zu erreichen. Der Schraubmechanismus kann zumindest ein Innengewinde und ein Außengewinde umfassen. Durch Verdrehen des Innengewindes relativ zu dem Außengewinde kann die (vertikale) Position des unteren Endes des Temperaturmessfühlers (entlang der Längsrichtung) verändert werden. Eine Schraubbewegung ist durch einen Anwender leicht durchführbar. Der Schraubmechanismus kann ermöglichen, die (vertikale) Position in zwei Richtungen, z.B. nach oben und nach unten, zu verändern.

Gemäß einer Ausführungsform der vorliegenden Erfindung ist durch Betätigung des Mechanismus, insbesondere des Schraubmechanismus, die Position des unteren Endes Temperaturmessfühlers entlang der Längsrichtung des Temperaturmessfühlers veränderbar. Die Betätigung des Schraubmechanismus kann ein relatives Verdrehen eines Innengewindes relativ zu einem Außengewinde umfassen. Ein Betätigungselement des Schraubmechanismus kann bei durch die Vorrichtung zum Verschließen verschlossenem Behälter von einem Anwender von außen zugänglich sein, etwa von einer oberen Seite der Vorrichtung zum Verschließen des Behälters.

Die Einstellung der Position des unteren Endes Temperaturmessfühlers entlang der Längsrichtung des Stabes kann z.B. in einem Bereich von zwischen 0 mm und 5 mm, insbesondere 0 mm bis 3 mm, ermöglicht sein und/oder darauf beschränkt sein. Der verwendete Behälter kann Fertigungstoleranzen hinsichtlich der Länge eines Halses (oder Öffnungswandung) bzw. eines vertikalen Abstandes von einem oberen Ende der Öffnungswandung bis zu der Position einer Abzweigung zu einem Kondensationszweig aufweisen. Um trotz der Fertigungstoleranzen eine definierte Positionierung des Temperaturmessfühlers gemäß dem standardisierten Test zu erreichen (z.B. in Höhe des Abzweigung zum Kondensationszweig), kann vorteilhafterweise der Temperaturmessfühler in dem oben erwähnten Bereich eingestellt werden, welcher ausreichend breit ist, um erwartete Fertigungstoleranzen insbesondere des Behälters zu kompensieren. Wenn die Verstellbarkeit der Position auf den oben definierten Bereich beschränkt ist, kann vorteilhaft die Vorrichtung relativ klein von den Dimensionen gehalten werden, so dass insbesondere kein Teil des Temperaturmessfühlers über eine obere Außenoberfläche der Vorrichtung zum Verschließen des Behälters hervorsteht. Damit kann die Handhabung vereinfacht werden und die Vorrichtung kompakt gehalten werden.

Gemäß einer Ausführungsform der Erfindung umfasst der Mechanismus zum Verstellen einer Position des unteren Endes des Temperaturmessfühlers entlang einer Längsrichtung des Temperaturmessfühlers einen Schraubmechanismus.

Gemäß einer Ausführungsform der vorliegenden Erfindung weist der Schraubmechanismus ein Schraubelement mit einem Schraubgewinde auf, wobei durch Umdrehung des Schraubelements um eine Schraubachse die Position des unteren Endes des Temperaturmessfühlers verstellbar ist. Die Verstellung der Position des unteren Endes des Temperaturmessfühlers erfolgt insbesondere in vertikaler oder annähernd vertikaler Richtung. Die Schraubachse kann insbesondere mit der, falls vorhanden, vorliegenden Zylindersymmetrieachse (des Verschlussteils) zusammenfallen bzw. dazu parallel sein. Das Schraubgewinde kann ein Innengewinde oder ein Außengewinde umfassen. Damit kann die Verstellbarkeit unter Benutzung von herkömmlich verfügbaren mechanischen Elementen implementiert sein und eine Handhabung kann vereinfacht sein.

Gemäß einer Ausführungsform der vorliegenden Erfindung weist die Vorrichtung ferner einen Mittelteil mit einem Innenraum auf, insbesondere oberhalb des Verschlussteils, wobei in dem Innenraum ein oberes Ende des Temperaturmessfühlers angeordnet ist. Der Mittelteil kann z.B. ein Gehäuse umfassen, wobei in dem Innenraum verschiedene weitere Komponenten angeordnet sein können. Wenn in dem Innenraum ein oberes Ende des Temperaturmessfühlers angeordnet ist, kann vermieden sein, dass der Temperaturmessfühler oberhalb der Vorrichtung zum Verschließen hervorsteht. Ein oberes Ende des Temperaturmessfühlers kann vollständig innerhalb der Vorrichtung zum Verschließen verborgen sein, um somit auch im Außenraum nicht hinderlich sein müssen. In dem Mittelteil können z.B. ein oder mehrere elektronische und/oder mechanische Komponenten angeordnet sein, um eine Positionierung und/oder Halterung mindestens eines Temperaturmessfühlers zu unterstützen und/oder um eine Versorgung des Temperaturmessfühlers mit elektrischer Energie bzw. mit Steuersignalen und/oder um eine Ausgabe von Messdaten von dem Temperaturmessfühler zu unterstützen. Somit kann die Vorrichtung zum Verschließen nicht nur die Funktion eines Verschließens des Behälters erfüllen, sondern kann ferner vorteilhaft die Temperaturmessung an ein oder mehreren definierten Positionen unterstützen.

Gemäß einer Ausführungsform der vorliegenden Erfindung weist die Vorrichtung ferner eine Kappe (bzw. Deckel oder oberes Gehäuseteil) auf zum Verschließen des Innenraums (der in dem Mittelteil vorgesehen ist). Der Mittelteil kann zwischen dem Verschlussteil und der Kappe angeordnet sein. Die Kappe kann zum Schutz von Komponenten innerhalb des Innenraums vorgesehen sein sowie in anderen Ausführungsformen zusätzlich oder alternativ auch Teil des Schraubmechanismus sein.

Gemäß einer Ausführungsform der vorliegenden Erfindung weist die Kappe ein als Durchgangsloch oder Sackloch ausgebildetes Innengewinde auf. Damit sind verschiedene Möglichkeiten der Verwirklichung des Schraubmechanismus gegeben. Eine Gewindeachse bzw. Schraubachse des Innengewindes kann z.B. mit der, falls vorhanden, Zylindersymmetrieachse zusammenfallen oder dazu parallel sein.

Gemäß einer Ausführungsform der vorliegenden Erfindung bildet die Kappe das Schraubelement, wobei in das Innengewinde der Kappe ein oberes Ende des Temperaturmessfühlers mit einem Außengewinde eingeschraubt ist. Die Kappe kann relativ zu dem Mittelteil gelagert sein, so dass bei Verdrehung der Kappe die vertikale Position der Kappe relativ zu dem Mittelteil nicht geändert wird, jedoch durch Verdrehen der Kappe der Temperaturmessfühler nach oben bzw. nach unten bewegt wird, bei Einschrauben des Außengewindes des Temperaturmessfühlers in das Innengewinde der Kappe. Das Innengewinde der Kappe kann integral mit der gesamten Kappe gebildet sein oder als ein Einsatzteil aus einem von einem übrigen Material der Kappe verschiedenen Material, etwa Metall, gebildet sein. Falls die Kappe das Schraubelement bildet, können weitere Einbuchtungen oder Hervorstehungen an der Kappe vorgesehen sein, um z.B. einen Eingriff von einem oder mehreren Fingern zu erlauben, um eine Verdrehung der Kappe zu erleichtern.

Gemäß einer Ausführungsform der vorliegenden Erfindung ist das Schraubelement als eine (Verstell-)Schraube mit Außengewinde ausgebildet, wobei das Innengewinde in der Kappe als Durchgangsgewinde ausgebildet ist, in das die Verstellschraube eingeschraubt ist, um eine nach oben vorgespannte Stirnfläche eines oberen Endes des Temperaturmessfühlers zu kontaktieren. Die Verstellschraube (insbesondere Griffbereich davon) kann nach oben oberhalb einer oberen Oberfläche der Kappe hervorstehen, um einem Anwender zu erlauben, die Verstellschraube zu drehen. In dem über die Kappe hervorstehenden Bereich kann die Schraube eine "griffige" Außenoberfläche aufweisen, z.B. mit Riefen parallel zur Schraubachse in einer Außenoberfläche dieses Teils der Verstellschraube.

Durch Hereinschrauben der Verstellschraube in das Durchgangsgewinde der Kappe kann eine untere Stirnfläche der Verstellschraube die nach oben vorgespannte Stirnfläche des oberen Endes des Temperaturmessfühlers nach unten (d.h. entlang der Richtung des Temperaturmessfühlers nach unten) bewegen. Damit wird auch die vertikale Position des unteren Endes des Temperaturmessfühlers nach unten verändert bzw. bewegt. Wird die Verstellschraube in einer entgegengesetzten Schraubrichtung in Richtung nach oben aus dem Durchgangsgewinde herausgeschraubt, wobei jedoch andere Abschnitte des Außengewindes der Schraube innerhalb des Durchgangsgewindes der Kappe verbleiben, so bewegt sich der Temperaturmessfühler aufgrund der Vorspannung des Temperaturmessfühlers nach oben, um somit die vertikale Position des unteren Endes des Temperaturmessfühlers in Richtung nach oben zu verändern. Ein oberer oberhalb der Kappe angeordneter Griffbereich der Schraube kann z.B. so ausgestaltet sein, dass der Griffbereich von zwei menschlichen Fingern, z.B. dem Daumen und dem Zeigefinger, leicht verdreht werden kann.

Gemäß einer Ausführungsform der vorliegenden Erfindung ist die Vorspannung (des Temperaturmessfühlers nach oben) durch eine Spiralfeder erzeugt, durch die der Temperaturmessfühler geführt ist und die sich in einem unteren Ende in dem Mittelteil (z.B. Gehäuseteil) und an einem oberen Ende an einer Wulst des Temperaturmessfühlers abstützt (bzw. dazwischen eingespannt ist), um diesen nach oben vorzuspannen. Die Spiralfeder kann vollständig innerhalb des Innenraums des Mittelteils angeordnet sein, so dass deren Längsachse zusammenfällt mit der Längsachse des Temperaturmessfühlers, wobei die Längsachse des Temperaturmessfühlers insbesondere mit einer (falls vorhanden) Zylinderrotationssymmetrieachse des Verschlussteils und/oder der Durchgangsöffnung des Verschlussteils zusammenfallen kann oder dazu parallel sein kann.

Das obere Ende des Temperaturmessfühlers kann innerhalb des Innenraums des Mittelteils angeordnet sein, und zwar bei allen möglichen Einstellungen der (vertikalen) Position des unteren Endes des Temperaturmessfühlers. Die Verstellschraube kann je nach Einstellung mehr oder weniger (von oben) in den Innenraum hineinragen. Das Innengewinde der Kappe kann integral mit der Kappe ausgebildet sein oder als ein Element gebildet sein, welches ein anderes Material aufweist als übriges Material der Kappe. Insbesondere kann das Innendurchgangsgewinde durch eine Metallhülse gebildet sein, welche in der Kappe vorgesehen ist.

Gemäß einer Ausführungsform der vorliegenden Erfindung weist die Vorrichtung ferner eine, insbesondere in dem Innenraum des Mittelteils angeordnete, elektronische Schaltung auf, insbesondere auf einer Leiterplatte, die ausgebildet ist, von dem Temperaturmessfühler ausgegebene Messdaten zu verarbeiten, insbesondere in digitale Signale zu konvertieren. Wenn die von den Temperaturmessfühler ausgegebenen (insbesondere analogen) Messdaten in digitale Signale konvertiert sind, kann eine weitere Übertragung zu einem Auswertegerät außerhalb der Vorrichtung zum Verschließen des Behälters zuverlässiger erfolgen. In herkömmlichen Vorrichtungen werden analoge Messdaten von Temperaturfühlern zu einer außen gelegenen Einheit übertragen, was mit Übertragungsfehlern behaftet sein kann. Die Übertragung von digitalen Signalen kann zuverlässiger durchgeführt werden.

Gemäß einer Ausführungsform der vorliegenden Erfindung weist die elektronische Schaltung auf einen elektronischen Speicher mit Kalibrierdaten für den Temperaturmessfühler; und/oder einen A-D-Wandler; und/oder ein Kommunikationsmodul, das ausgebildet ist, digitale Signale drahtlos oder drahtbasiert zu übertragen; und/oder einen Bezugswiderstand, in Bezug auf welchen ein temperaturabhängiger Widerstand des Temperaturmessfühlers, insbesondere Pt100, ferner insbesondere Metall Pt100, bestimmt wird. Damit kann eine Kalibrierung des Temperaturmessfühlers und auch weiterer Temperaturmessfühler, falls vorhanden, durch Verarbeitung der Messdaten innerhalb der Vorrichtung selbst durchgeführt werden, ohne eine Kalibrierung durch ein weiteres Gerät außerhalb der Vorrichtung zu erfordern. Der AD-Wandler kann ausgebildet sein, analoge Daten in digitale Daten umzuwandeln. Das Kommunikationsmodul kann herkömmliche Kommunikationsprotokolle unterstützen, wie Ethernet, USB oder andere. Eine drahtlose Übertragung kann mittels Radiowellen erfolgen. Der Bezugswiderstand kann einen definierten Widerstandswert aufweisen, um diesen Widerstandswert mit einem Widerstandswert, welcher für einen temperaturabhängigen Widerstand des Temperaturmessfehlers bestimmt wurde, zu vergleichen. Die Kalibrierdaten können z.B. ein oder mehrere Kennlinien umfassen, welche den Widerstandswert des Temperaturmessfühlers in Abhängigkeit der Temperatur aufzeigen, z.B. in Form einer Tabelle, eines Graphen oder eines mathematischen Zusammenhangs. Insbesondere kann der Temperaturmessfühler einen Platin-Widerstandsmessfühler, wie etwa Pt100 umfassen. Der Messplatindraht kann z.B. in Metall eingebettet (Metall-Pt100) sein, um eine Ansprechzeit des Temperaturmessfühlers zu vermindern. Somit kann eine Vorrichtung mit spezifischem Temperaturmessfühler einschließlich der spezifisch dafür bestimmten und gespeicherten Kalibrierdaten bereitgestellt werden.

Gemäß einer Ausführungsform der vorliegenden Erfindung weist das Temperaturmesssystem einen weiteren Temperaturmessfühler (oder insbesondere noch weitere Temperaturmessfühler) auf, insbesondere ein Thermoelement, der durch den Verschlussteil geführt ist und mit seinem unteren Ende eine Temperatur an einem Boden des Behälters zu messen ausgebildet ist. Der weitere Temperaturmessfühler kann länger sein als der erste Temperaturmessfühler. Der weitere Temperaturmessfühler kann vorteilhafterweise durch eine weitere Durchgangsöffnung innerhalb des Verschlussteils hindurchgeführt sein. Das Thermoelement kann ein Paar metallischer Leiter aus unterschiedlichem Material umfassen, die an einem Ende verbunden sind und aufgrund des thermoelektrischen Effekts zur Temperaturmessung geeignet sind. Eine Thermospannung kann aufgrund einer Temperaturdifferenz zwischen der Messstelle (am Boden des Behälters) und einer Vergleichsstelle entstehen. Die Vergleichsstelle kann z.B. innerhalb des Innenraums angeordnet sein und/oder kann z.B. Raumtemperatur betragen.

Der weitere Temperaturfühler kann in der Position einstellbar sein oder über eine weitere Vorspannfeder, insbesondere Spiralfeder, nach unten vorgespannt sein, wobei die weitere Vorspannfeder insbesondere eine weitere Leiterplatte, an der der weitere Temperaturmessfühler befestigt ist, nach unten drückt. Damit kann gewährleistet sein, dass das untere Ende des weiteren Temperaturmessfühlers zuverlässig den Boden des Behälters berührt, um z.B. effektiv einen Trockenpunkt bestimmen zu können.

Gemäß einer Ausführungsform der vorliegenden Erfindung ist die Vorrichtung derart ausgebildet, dass der Mittelteil zumindest einen oberen Teil des Verschlussteils umgreift und/oder aufnimmt und insbesondere einen elastischen Sprengring aufweist, um bei in die Öffnung des Behälters vollständig eingeschobenem Verschlussteil unterhalb einer nach außen hervortretenden Wulst einer äußeren Öffnungswandung der Öffnung des Behälters einzurasten.

Der Sprengring kann eine mechanische Festigkeit der (reversiblen) Verbindung zwischen der Vorrichtung und dem Behälter verstärken. Während der Verschlussteil mit einer Innenoberfläche der die Öffnung des Behälters begrenzenden Öffnungswandung in Kontakt steht, kann der Sprengring mit einer Außenoberfläche der Öffnungswandung des Behälters (unter nach innen gerichteter Vorspannung) in Kontakt stehen, insbesondere unterhalb einer (äußeren) Wulst am oberen Ende der Öffnungswandung des Behälters angeordnet sein. Der Sprengring kann durch seine eigene elastische Kraft an seinen offenen Enden zusammengedrückt werden. Der Sprengring kann somit eine Außenoberfläche der Öffnungswandung umgreifen, so dass eine Verschiebung des Sprengrings nach oben (über die nach außen hervortretende Wulst der äußeren Öffnungswandung hinaus) zu verhindern bzw. zu erschweren. Damit kann eine feste (aber reversible) Verbindung zwischen der Vorrichtung zum Verschließen und dem Behälter erreicht werden.

Gemäß der Ausführungsform der vorliegenden Erfindung weist die Vorrichtung ferner einen oberhalb des Verschlussteils, insbesondere am Mittelteil angeordneten, quer zur Längsrichtung des Temperaturmessfühlers über den Verschlussteil und/oder Mittelteil hervorragenden, insbesondere zylindersymmetrischen Stützteil auf, der mit einem Gegenstück einer Hilfsvorrichtung ineinanderschiebbar (insbesondere einrastbar, z.B. mittels Formschlusses und/oder Kraftschlusses) ist, wobei der Stützteil oder das Gegenstück als Steckelement (z.B. männliches Element) und der Stützteil oder das Gegenstück als hülsenförmiges (z.B. weibliches) Element ausgeführt sind. Der Stützabschnitt kann verwendet werden, um die Vorrichtung samt Behälter zu haltern (insbesondere alleinig, ohne weitere Unterstützung zu tragen), insbesondere während eines standardisierten Tests zur Untersuchung einer Probe. Der Stützabschnitt kann z.B. von dem Mittelteil entlang einer Richtung hervorstehen, welche zwischen 90° und 45° relativ zu der Längsrichtung des Temperaturmessfühlers ausgerichtet ist. Der Stützabschnitt kann somit z.B. leicht nach unten (relativ zu einer horizontalen Richtung) von dem Mittelteil hervorstehen. Wenn der Stützabschnitt z.B. nach schräg unten von dem Mittelteil hervorsteht, kann eine Halterungskraft sowohl in vertikaler Richtung als auch in horizontaler Richtung erreicht werden, um eine zuverlässige sichere Halterung zu gewährleisten. Eine zumindest approximative Zylindersymmetrie des Stützabschnitts kann bezüglich einer Symmetrieachse vorliegen, welche quer zu der Längsachse des Temperaturmessfühlers (des Temperaturmesssystems) liegt, z.B. in einem Bereich von 90° bis 45° in Bezug auf die Längsrichtung des Temperaturmessfühlers. In anderen Ausführungsformen weist der Stützabschnitt keine Zylindersymmetrie auf, sondern hat z.B. einen rechteckigen oder quadratischen Querschnitt, so dass der Stützabschnitt nur in einer definierten azimutalen Orientierung in das Gegenstück aufgenommen werden kann bzw. mit dem Gegenstück gekoppelt werden kann. Damit kann eine effektive Halterung in einer definierten Orientierung der Vorrichtung zum Verschließen mitsamt dem Behälter erreicht werden.

Der Stützabschnitt kann z.B. in ein Gegenstück einschiebbar sein oder der Stützabschnitt kann ein Gegenstück nach Ineinanderschieben zumindest teilweise umgreifen oder umgeben. Teile des Stützabschnitts können geometrisch komplementär zu Teilen des Gegenstücks geformt sein. Nach Ineinanderschieben des Stützabschnitts und des Gegenstücks können der Stützabschnitt und damit auch die gesamte Vorrichtung zum Verschließen des Behälters formschlüssig an dem Gegenstück gehaltert sein.

Gemäß einer Ausführungsform der vorliegenden Erfindung umfasst der Stützabschnitt magnetisierbares und/oder magnetisches Material. Ebenso kann das Gegenstück magnetisierbares und/oder magnetisches Material umfassen, um eine magnetische Kopplung zwischen dem Stützabschnitt und dem Gegenstück zu ermöglichen. Verschiedene Ausbildungen von Magnetverschlüssen können zwischen Gegenstück und dem Stützabschnitt vorgesehen sein.

Gemäß einer Ausführungsform der vorliegenden Erfindung weist die Vorrichtung ferner einen Stecker und/oder eine Dose auf, um, insbesondere über ein elektrisches Kabel, eine elektrische Verbindung der elektronischen Schaltung nach außerhalb zu ermöglichen.

Ist ein Stecker oder eine Dose vorhanden, so kann ein unhandlich langes Kabel vermieden werden. Der Stecker oder die Dose können mit dem Stützabschnitt integriert sein, d.h. Teil von diesem sein. In anderen Ausführungsformen ist der Stecker und/oder die Dose getrennt von dem Stützabschnitt am Ende eines Anschlusskabels ausgeführt, insbesondere einen Magnetstecker und/oder -buchse aufweisend. Wenn der Stecker und/oder die Dose mit dem Stützabschnitt integriert sind, kann durch Ineinanderschieben des Gegenstücks und des Stützabschnitts sowohl eine mechanische insbesondere formschlüssige Verbindung erreicht werden als auch eine elektrische Verbindung, wenn der Stecker bzw. die Dose mit einer entsprechenden Gegenstückdose bzw. Gegenstückstecker in dem Gegenstück koppelt. Somit kann lediglich ein einziger Handgriff, nämlich ein Ineinanderschieben des Stützabschnitts in das Gegenstück ausreichen, um sowohl eine mechanische Halterung als auch eine elektrische Verbindung der Vorrichtung, insbesondere samt dem Behälter, zu erreichen. Damit ist die Handhabung wesentlich vereinfacht.

Der Verschlussteil (bzw. der Stopfen) kann aus Teflon gefertigt sein und/oder der Mittelteil kann aus Nylon gefertigt sein. Alternativ kann der Stopfen auch aus PEEK (Polyetheretherketon) oder PEI (Polyetherimid) gefertigt sein. Weitere Materialien sind möglich.

Die Vorrichtung kann ferner zumindest eine (z.B. Gummi-) Dichtung aufweisen, die zwischen dem Temperaturmessfühler und einer die Durchgangsöffnung begrenzenden Oberfläche im Verschlussteil vorgesehen ist. Damit kann verhindert werden, dass Dampf durch einen (etwaigen) Spalt zwischen dem Temperaturmessfühler und einer die Durchgangsöffnung begrenzenden Oberfläche nach außen entweicht bzw. in den Innenraum entweicht. Die Dichtung kann z.B. eine oder mehrere O-Ringe umfassen. Der eine oder die mehreren O-Ringe können z.B. über den Temperaturmessfühler gezogen sein.

Gemäß einer Ausführungsform der vorliegenden Erfindung ist ein Flüssigkeitsanalysesystem, insbesondere Automatische Destillations-Einheit zum Analysieren einer Flüssigkeit, insbesondere gemäß zumindest einem standardisierten Test bereitgestellt, welches aufweist: einen Behälter, insbesondere mit einem zu einem Kondensor führenden Ausgang bzw. Zweig; und eine Vorrichtung zum Verschließen eines Behälters gemäß einer der vorangehend beschriebenen Ausführungsform aufweist. Damit ist ein System zum Untersuchen z.B. von Mineralölprodukten oder Lösungsmitteln gemäß standardisierten Tests bereitgestellt.

Gemäß einer Ausführungsform der vorliegenden Erfindung weist das Flüssigkeitsanalysesystem ferner auf: eine Stützaufnahme, die ausgebildet ist, einen Stützteil der Vorrichtung aufzunehmen; und/oder eine Heizung, die angeordnet ist, den Behälter von unten zu heizen; und/oder ein Steuersystem, das ausgebildet ist, die Heizung anzusteuern und/oder Messdaten von dem Temperaturmesssystem zu erhalten und auszuwerten insbesondere gemäß einem standardisierten Test.

Ausführungsformen der vorliegenden Erfindung werden nun mit Bezug auf die beiliegenden Zeichnungen beschrieben. Die Erfindung ist nicht auf die illustrierten oder beschriebenen Ausführungsformen beschränkt.

### Kurze Beschreibung der Zeichnungen

Fig. 1 illustriert in einer schematischen Schnittansicht ein Flüssigkeitsanalysesystem mit einer Vorrichtung zum Verschließen eines Behälters gemäß einer Ausführungsform der vorliegenden Erfindung zusammen mit dem Behälter;
Fig. 2 illustriert eine Teilansicht einer Vorrichtung zum Verschließen eines Behälters in Schnittansicht gemäß einer Ausführungsform der vorliegenden Erfindung, gehaltert durch eine Hilfsvorrichtung;
Fig. 3 illustriert in schematischer Schnittansicht eine Vorrichtung zum Verschließen eines Behälters gemäß einer Ausführungsform der vorliegenden Erfindung;
Fig. 4 illustriert perspektivische Ansichten von Magnetverbindungselementen, welche in Ausführungsformen einer Vorrichtung zum Verschließen eines Behälters zur Anwendung kommen können; und
Fig. 5 illustriert in schematischer Darstellung ein Flüssigkeitsanalysesystem gemäß einer Ausführungsform der vorliegenden Erfindung.

### Detaillierte Beschreibungen von einigen bevorzugten Ausführungsformen

Es sollte verstanden werden, dass Elemente, welche gleich oder ähnlich in Struktur und/oder Funktion sind, in den Figuren der verschiedenen Ausführungsformen mit Bezugszeichen bezeichnet sind, welche sich lediglich in der ersten Ziffer unterscheiden.

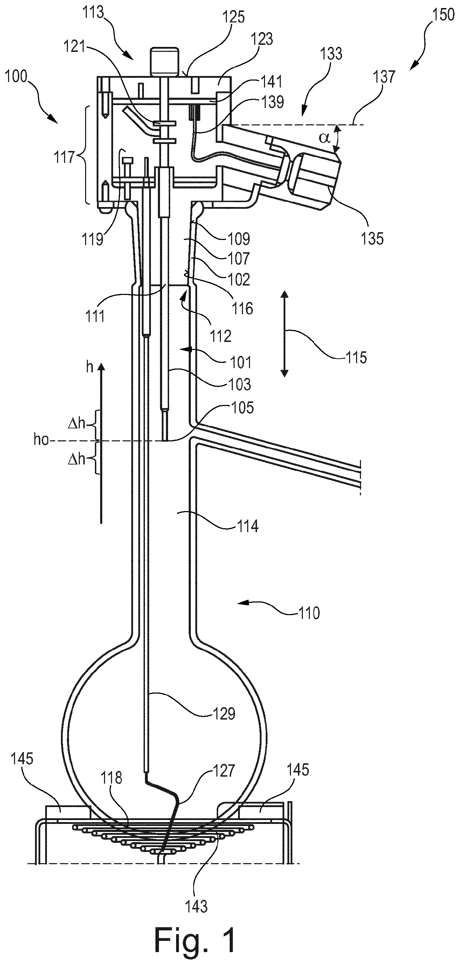

Fig. 1 illustriert in einer schematischen Schnittansicht ein Flüssigkeitsanalysesystem 150 gemäß einer Ausführungsform der vorliegenden Erfindung, welches eine Vorrichtung 100 zum Verschließen eines Behälters 110 gemäß einer Ausführungsform der vorliegenden Erfindung umfasst. Das Flüssigkeitsanalysesystem 150 umfasst dabei sowohl den Behälter 110, welcher als Glasrundkolben ausgeführt ist, als auch die Vorrichtung 100.

Die Vorrichtung 100 ist auf eine Öffnung 112 des Behälters 110 aufgesetzt, um diesen dampfdicht zu verschließen. Die Vorrichtung 100 umfasst zumindest ein Temperaturmesssystem 101, welches zum Messen einer Dampftemperatur der Flüssigkeit innerhalb eines Gasraumes 114 des Behälters 110 ausgebildet ist. Das Temperaturmesssystem 101 umfasst dazu einen Temperaturmessfühler 103 mit einem (unteren) Ende 105, welcher insbesondere als ein Pt100, insbesondere Metall-Pt100 ausgeführt sein kann. Das Temperaturmesssystem 101 umfasst weitere Elemente, die mit Bezug auf die folgenden Figuren beschrieben werden, insbesondere Messelektronik, elektronischer Speicher mit Kalibrierdaten, etc.

Die Vorrichtung 100 umfasst ferner einen Verschlussteil 107 mit einer insbesondere konisch ausgebildeten Außenoberfläche 109, die zum Kontaktieren einer Innenoberfläche 116 der Öffnungswandung 102 der Öffnung 112 des Behälters 110 zum dampfdichten Verschließen des Behälters 110 ausgebildet ist. Der Verschlussteil 107 weist eine Durchgangsöffnung 111 auf, durch die ein Teil des Temperaturmessfühlers 103 derart geführt ist, dass das untere Ende 105 des Temperaturmessfühlers 103 innerhalb des Behälters, insbesondere innerhalb des Dampfraumes 114, angeordnet ist.

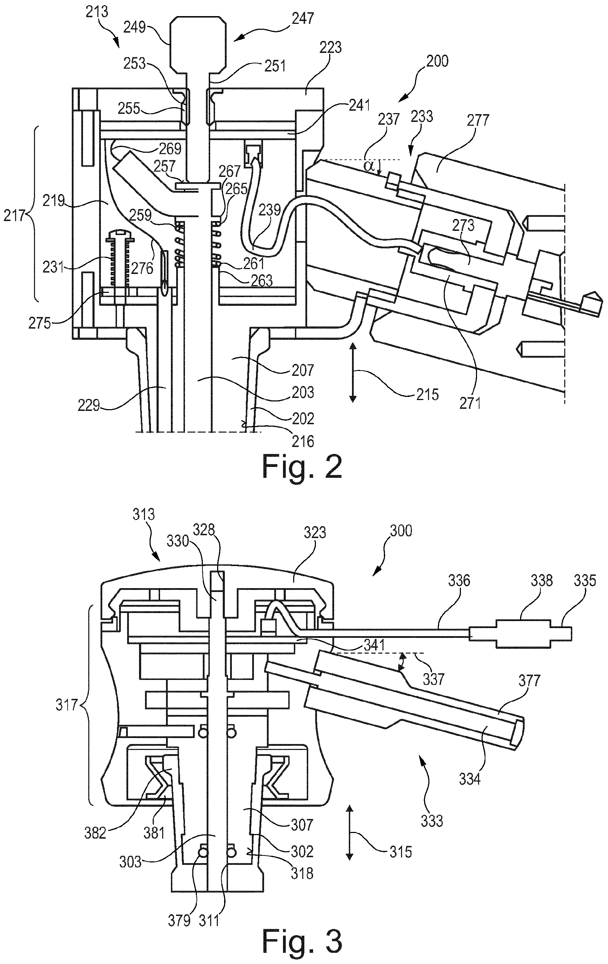

Die Vorrichtung 100 weist ferner einen Schraubmechanismus 113 zum Verstellen einer vertikalen Position h entlang einer Längsrichtung 115 des Temperaturmessfühlers 103 auf. Im illustrierten Beispiel ist das untere Ende 105 des Temperaturmessfühlers 103 in einer Position h0 positioniert, durch Betätigung des Schraubmechanismus 113 kann es in einem Bereich ±Δh, z.B. ± 5 mm erstellt werden. Der Schraubmechanismus wird in verschiedenen Ausführungsformen mit Bezug auf Fign. 2 und 3 erläutert.

Die Vorrichtung 100 zum Verschließen umfasst ferner einen Mittelteil 117 mit einem Innenraum 119 oberhalb des Verschlussteils 107, wobei in dem Innenraum 119 ein oberes Ende 121 des Temperaturmessfühlers 103 angeordnet ist. Der Innenraum 119 ist mit einer Kappe 123 verschlossen, so dass der Temperaturmessfühler 103 nicht über eine obere Endfläche 125 der Kappe 123 hervorsteht.

Die Vorrichtung 100 bzw. das Temperaturmesssystem 101 umfasst in der illustrierten Ausführungsform einen weiteren Temperaturmessfühler 129, welcher insbesondere als ein Thermoelement gebildet ist, der durch den Verschlussteil 107 geführt ist und mit seinem unteren Ende 127 eine Temperatur an einem Boden 118 des Behälters 110 zu messen ausgebildet ist. In der in Fig. 1 illustrierten Ausführungsform ist das untere Ende 127 des weiteren Temperaturmessfühlers 129 über eine weitere Vorspannfeder (wie z.B. in Fig. 2 mit Bezugszeichen 231 bezeichnet ist) nach unten vorgespannt, so dass das untere Ende 127 des weiteren Temperaturmessfühlers 129 gegen den Boden 118 des Behälters 110 gedrückt wird.

Die Vorrichtung 100 umfasst ferner einen oberhalb des Verschlussteils 107, insbesondere am Mittelteil 117 angeordneten und damit verbundenen, quer zur Längsrichtung 115 des Temperaturmessfühlers 103 über den Verschlussteil 107 und/oder den Mittelteil 117 seitlich hervorragenden Stützabschnitt 133, der mit einem (in Fig. 1 nicht illustrierten) Gegenstück einer Hilfsvorrichtung ineinanderschiebbar ist. In der in Fig. 1 illustrierten Ausführungsform ist der Stützabschnitt 133 als ein Steckelement (männliches Element) gebildet, kann aber auch als ein Hülsenelement (weibliches Element). Der Stützabschnitt 133 ist um einen Winkel α (z.B. zwischen 0° und 45°) aus einer Horizontalen 137 nach unten geneigt, um eine zuverlässige Halterung der Vorrichtung 100 samt dem Behälter 110 sowohl in vertikaler Richtung als auch in horizontaler Richtung zu ermöglichen.

Der Stützabschnitt umfasst einen (darin integrierten) elektrischen Stecker 135, um über ein elektrisches Kabel eine elektrische Verbindung einer elektronischen Schaltung, welche in dem Innenraum 119 aufgenommen ist, nach außerhalb zu ermöglichen. In anderen Ausführungsformen ist anstatt eines Steckers 135 eine Dose vorgesehen, um mit einem Stecker einer Hilfsvorrichtung zu koppeln.
Der Stecker 135 kann mehrpolig ausgelegt sein und ein Kabel kann daran gekoppelt sein, welches als Kabel 139 in den Innenraum 119, insbesondere zu einer Leitungsplatine 141, geführt wird, welche eine elektronische Schaltung umfassen kann.

Die Vorrichtung 150 umfasst ferner eine Heizung 143, die unterhalb des Behälters 110 und unterhalb einer Lochplatte 145 angeordnet ist, um den Behälter von unten zu heizen. Die Vorrichtung 150 kann ferner ein nicht illustriertes Steuersystem umfassen, das ausgebildet ist, die Heizung 143 anzusteuern und/oder Messdaten von dem Temperaturmesssystem 101 zu erhalten und auszuwerten.

Fig. 2 illustriert in schematischer Schnittansicht einen Teil einer Vorrichtung 200 zum Verschließen eines Behälters gemäß einer Ausführungsform der vorliegenden Erfindung, wobei von dem Behälter lediglich eine Öffnungswandung 202 mit Innenoberfläche 216 illustriert ist. Die Vorrichtung 200 weist einige Ähnlichkeiten zu der in Fig. 1 illustrierten Vorrichtung 100 auf, welche nicht nochmals im Detail beschrieben werden. In Fig. 2 ist das untere Ende des Temperaturmessfühlers nicht illustriert, befindet sich jedoch wie in der in Fig. 1 illustrierten Ausführungsform am Ende des Temperaturmessfühlers 203, so dass durch Verschiebung des Temperaturmessfühlers 203 entlang der vertikalen Richtung 215 auch die Position des unteren Endes verändert wird.

Der Schraubmechanismus 213 zum Verändern der Position des Temperaturmessfühlers 203 weist ein Schraubelement (Verstellschraube) 247 auf, welches einen Griffabschnitt 249 und einen Außengewindeabschnitt 251 aufweist. Im Zentrum der Kappe 223 ist mittels eines Gewindeeinsatzes 255 ein durchgehendes Innengewinde 253 bereitgestellt, welches als Durchgangsinnengewinde ausgeführt ist. Durch das Durchgangsinnengewinde 253 ist der Außengewindeabschnitt 251 des Schraubelements 247 eingedreht. Ein unteres Ende des Schraubelementes 247, z.B. eine Stirnseite des Gewindeabschnitts 251, kontaktiert eine nach oben vorgespannte Stirnfläche 257 des Temperaturmessfühlers 203 bzw. ein oberes Endes des Temperaturmessfühlers. Die Vorspannung des Temperaturmessfühlers 203 nach oben ist durch eine Spiralfeder 259 erreicht, durch die der Stab 203 geführt ist und die sich an einem unteren Ende 261 in dem Mittelteil, insbesondere an einem Sims 263 und an einem oberen Ende 265 an einer Wulst 267 des Temperaturmessfühlers 203 abstützt, um diesen nach oben vorzuspannen.

Die Leiterplatte 241 innerhalb des Innenraumes 219 des Mittelteils 217 weist eine elektronische Schaltung auf und erhält über eine elektrische Leitung 269 Messdaten von dem am unteren Ende des Temperaturmessfühlers 203 befindlichen sensitiven Bereich und ist ausgebildet, diese Messdaten zu verarbeiten, insbesondere eine Kalibrierung vorzunehmen und/oder eine Konvertierung in digitale Signale vorzunehmen. Digitale Daten können dann über ein Kabel 239 zu einer Steckdose 271 geführt werden, in die ein Stecker, z.B. Klinkenstecker 273 einer Auswerteeinheit eingesteckt werden kann, um die digitalen Daten nach außen zu übermitteln.

Auch die in Fig. 2 illustrierte Ausführungsform 200 umfasst einen weiteren Temperaturmessfühler 229 mit einem (in Fig. 2 nicht dargestellten) unteren Ende, das bis zu einem Boden des Behälters reicht. Dieser Messfühler ist über die Spiralfeder 231 nach unten vorgespannt, wobei die weitere Vorspannfeder 231 eine weitere Leitungsplatine 275 nach unten drückt, an der der weitere Messfühler 229 angebracht ist. Auch Messdaten des weiteren Temperaturmessfühlers werden über ein Kabel 276 zu der elektronischen Schaltung übermittelt, welche auf der Leiterplatine 241 implementiert ist.

Auch in Fig. 2 ist der Stützabschnitt 233 als Steckelement ausgebildet und ist in ein hülsenförmiges Gegenstück 277 eingeführt, um eine formschlüssige Verbindung einzugehen. Bei dem mechanischen Einführen des Stützabschnitts 233 in das Gegenstück 277 wird gleichzeitig die elektrische Anschlussdose 271 mit dem elektrischen Anschlussstecker 273 elektrisch verbunden.

In Fig. 3 ist in schematischer Schnittansicht ein Teil einer Vorrichtung 300 zum Verschließen eines Behälters illustriert, in dem Zustand eines Verschlossenseins des nur teilweise illustrierten Behälters durch Einsetzen des Verschlusselements 307 in die Öffnung des Behälters, welcher durch die Öffnungswandung 302 begrenzt ist. Die in Fig. 3 illustrierte Vorrichtung 300 umfasst lediglich einen einzigen Temperaturmessfühler 303. Ein weiterer Temperaturmessfühler ist nicht dargestellt, kann aber in anderen Ausführungsformen ähnlich wie in Fign. 1 und 2 illustriert ist, ausgebildet und vorgesehen sein.

Zur Abdichtung eines etwaigen Spaltes zwischen einer Außenoberfläche des Messfühlers 303 und einer die Durchgangsöffnung 311 begrenzenden Innenoberfläche des Verschlussteils 307 sind Dichtungs-O-Ringe 379 vorgesehen. Wie in Fig. 3 dargestellt ist, umgreift der Mittelteil 317 zumindest einen oberen Teil des Verschlussteils 307. Ferner ist ein elastischer Sprengring 381 vorgesehen, der, bei in die Öffnung des Behälters vollständig eingeschobenem Verschlussteil 307, unterhalb einer nach außen hervortretenden Wulst 382 einer äußeren Öffnungswandung 302 des Behälters einrastet. Durch Vorsehen des Sprengringes 381 ist ein Abziehen, insbesondere unbeabsichtigtes Abziehen, der Vorrichtung 300 von dem Behälter erschwert.

Der Stützteil 333 umfasst einen Stützstab 334, welcher in ein Gegenstück 377 einer Hilfsvorrichtung eingeschoben ist und dort einrastet, um eine mechanische Halterung zu erreichen. Auch der in Fig. 3 illustrierte Stützabschnitt 333 ist von der Horizontalen um einen Winkel nach unten geneigt. Der Winkel α der Neigung nach unten kann z.B. zwischen 0° und 45° betragen. Die Horizontale 337 ist dabei senkrecht zu der vertikalen Richtung bzw. Längsrichtung 315 des Temperaturmessfühlers 303. Der Stützteil 333 umfasst jedoch nicht integral einen elektrischen Stecker oder eine elektrische Dose, wie in der in Fig. 2 illustrierten Ausführungsform. Stattdessen ist ein elektrischer Stecker 335 am Ende eines elektrischen Kabels 336 getrennt von dem Stützteil 333 vorgesehen. In dem Magnetabschnitt 338 ist magnetisierbares Material bzw. ein Magnet vorgesehen, um mit einem Gegenmagneten (nicht dargestellt) eine Kopplung zu erreichen.

Auch der Schraubmechanismus 313 der in Fig. 3 illustrierten Ausführungsform 300 ist verschieden von dem Schraubmechanismus 113 bzw. 213, die in Fign. 1, 2 illustriert sind. In der in Fig. 3 illustrierten Vorrichtung 300 ist in der Kappe 323 ein Innengewinde 328 (Sackloch) vorgesehen, in das ein oberes Ende 330 des Temperaturmessfühlers 303 mit Außengewinde eingeschraubt ist. Durch Drehung der (in dem Mittelteil 317 gelagerten) Kappe 323 wird der Temperaturmessfühler 303 entlang der vertikalen Richtung 315 verschoben, so dass auch das an seinem Ende vorgesehene Temperaturmesselement in seiner vertikalen Position verändert wird.

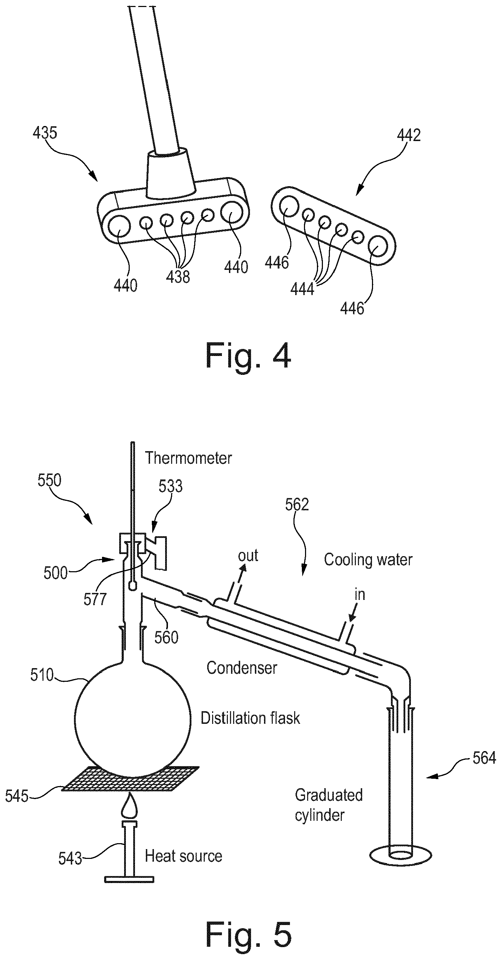

Fig. 4 illustriert beispielhaft eine Ausführungsform eines Steckers 435, welcher z.B. als eine Ausbildung des elektrischen Steckers 335, in Fig. 3 illustriert, verwendet werden kann. Der (Magnet-)Stecker 435 umfasst elektrische Kontakte 438, z.B. gefederte Goldkugeln oder vergoldete Kontakte 438 sowie Magnete 440. In dem Gegenstück 442 sind entsprechende elektrische Kontaktflächen 444 und Magnete bzw. magnetisierbares Material 446 vorgesehen, wobei elektrische Kontaktierungen zwischen den Anschlüssen 438 und 444 gebildet sind, sobald die Magnete 440 mit den magnetisierten Kopplungselementen 446 durch magnetische Kräfte in Berührung kommen.

Fig. 5 illustriert schematisch eine ein Flüssigkeitsanalysesystem 550 gemäß einer Ausführungsform der vorliegenden Erfindung, wobei eine Vorrichtung 500 zum Verschließen eines Behälters 510 ähnlich ausgebildet sein kann, wie in Fign. 1, 2 oder 3 illustriert ist, weswegen diese nicht näher im Detail beschrieben wird bzw. illustriert ist. Der Stützteil 533 der Vorrichtung 500 zum Verschließen des Behälters ist zum Haltern des Behälters mit einem Gegenstück 577 verbunden, das an einer nur teilweise dargestellten Hilfsvorrichtung angebracht ist. Der Behälter 510 umfasst ferner einen Zweig 560 eines Glasröhrenabschnitts, welcher zu einem Kondensator 562 führt, in welchem der Dampf kondensiert werden kann. Das Kondensat kann nachher in einem Zylinder 564 aufgefangen werden. Zur Bestimmung der Charakteristik der Verdampfungseigenschaften einer zu untersuchenden Probe kann auch das von dem Zylinder 564 aufgefangene Flüssigkeitsvolumen gemessen werden.

Die in Fign. 1, 5 illustrierten Vorrichtungen 150, 550 können z.B. als Automatische (oder auch Atmosphärische) Destillationseinheiten (ADU) ausgebildet sein, um beispielsweise Mineralölprodukte oder Lösemittel zu untersuchen. Die Behälter 110, 510 können z.B. genormte Probengefäße sein, die standardisierten Tests können z.B. gemäß den Normen ASTM D60, ASTM D850, ASTM D1078 oder ISO 1078 durchgeführt werden. Ausführungsformen der vorliegenden Erfindung ermöglichen ein sicheres Handhaben des Kolbens samt den Temperaturmesselementen. Ferner ist eine Abstützung des Kolbens ermöglicht, so dass insbesondere beim Andrücken der Lochplatte bzw. der Heizung das Dampfrohr 560 des Kolbens nicht beschädigt wird. Ferner können Kalibrierdaten von mindestens einem Temperatursensor innerhalb der Vorrichtung zum Verschließen abgespeichert werden, insbesondere in einem elektronischen Speicher auf einer Leiterplatte innerhalb des Innenraums des Mittelteils. Die Vorrichtung zum Verschließen ermöglicht die Höhe von mindestens einem des in den Kolben ragenden Temperatursensors einzustellen. Ferner ist die Vorrichtung ausgebildet, die Messdaten von mindestens einem Temperatursensor in digitale Daten umzuwandeln. Ferner können die Seriennummer von mindestens einem der Temperatursensoren und/oder der gesamten Vorrichtung selbst fest abgespeichert sein und/oder mit dem Gerät kann digital kommuniziert werden. Die Temperaturmessung mindestens eines der Temperaturmessfühler kann eine Genauigkeit von 0,1 K haben. Die Detektion des Trockenpunktes mittels des weiteren Temperaturfühlers kann mit Hilfe eines Thermoelementes erfolgen, da dieses eine relativ geringe Trägheit hat und eine relativ hohe Temperatur von über 100°C erwartet ist. Das Thermoelement kann federnd gelagert sein. Dazu ist eine Anschlussplatine federnd montiert, auf der das Thermoelement befestigt ist. Gemäß Ausführungsformen der vorliegenden Erfindung ist die Vorrichtung zum Verschließen als eine Einheit aus Verschlussteil samt Temperaturmesssystem gebildet, so dass der Anwender weniger Montageaufwand hat und somit das Risiko der Beschädigung vermindert ist. Kalibrierdaten und andere Konfigurations- oder Verarbeitungsdaten können in einem elektronischen Speicher (z.B. EEPROM oder Emulation im Mikrokontroller) hinterlegt sein. Dadurch kann eine Kalibrierung des Messelements eingespart werden. Die Kalibrierdaten müssen nicht notwendigerweise von vorneherein in dem elektronischen Speicher gespeichert sein, sondern können auch nachträglich vom Anwender selbst aufgespielt werden. Jedenfalls kann der elektronische Speicher derart eingerichtet sein, dass er Kalibrierdaten aufzunehmen und zu speichern in der Lage ist und diese zur Auswertung der Messergebnisse heranzuziehen in der Lage ist. Eine Elektronik bzw. eine elektronische Schaltung, welche auf der Platine implementiert sein kann, kann die Messdaten von dem einen oder den mehreren Messtemperaturfühlern erfassen und die Daten vorverarbeiten, insbesondere vor Übermittlung nach außen in digitale Daten wandeln. Dadurch kann eine geringe Störanfälligkeit bzw. eine höhere Datensicherheit ermöglicht werden. In einer weiteren Ausgestaltung kann ein weiterer Temperaturmessfühler zur Bestimmung der Temperatur innerhalb des Innenraums in dem Mittelteil vorgesehen sein, um z.B. eine Überwachung der Funktionstüchtigkeit und Funktionsfähigkeit des Gesamtsystems bzw. Temperaturmesssystems zu ermöglichen. Die elektrische Verbindung der Vorrichtung zum Verschließen des Behälters nach außen kann über einen Steckkontakt z.B. Klinkenstecker erfolgen, und kann z.B. vier Kontakte für Spannungsversorgungen und Kommunikation umfassen.

Die Halterung der Vorrichtung zum Verschließen des Behälters in einem Hilfsgerät kann über einen Haltestift erfolgen, der magnetisch ist und von einem Magneten der Hilfsvorrichtung fixiert wird. Über einen Magnetstecker mit mindestens drei Kontakten für Spannungsversorgung und Kommunikation kann eine elektrische Verbindung zu der Hilfsvorrichtung erfolgen. Dabei kann der Magnetstecker an einem kurzen Kabel hängen, so dass beim Einstecken des Stopfens der Stecker von allein in die entsprechende Buchse "springt".

Andere Ausführungsformen der vorliegenden Erfindung ermöglichen ein berührungsloses, d.h. drahtloses Übertragen von Temperaturmessdaten. Ebenfalls drahtlos kann ein Identifikationsdatum übertragen werden, um die Vorrichtung zum Verschließen des Behälters zu identifizieren und insbesondere um anzuzeigen, ob es sich um eine Vorrichtung mit ein oder zwei oder noch mehr Temperaturmessfühlern handeln. Für eine drahtlose Übertragung kann sowohl innerhalb der Vorrichtung zum Verschließen des Gerätes als auch in der Hilfsvorrichtung eine jeweilige Antenne vorgesehen sein. Die Vorrichtung kann z.B. auch als eine passive Vorrichtung ausgebildet sein, wobei eine Energieversorgung über drahtlose Energieübertragung erfolgen kann. Ferner kann eine Treiberschaltung zur Ermöglichung der Kommunikation über die Antenne vorhanden sein. Die Kommunikation kann z.B. mittels RFID-Protokolls oder auch mittels Bluetooth-Protokollen erfolgen.

## Patentansprüche

1. Vorrichtung (100, 200, 300) zum Verschließen eines Behälters (110), insbesondere Kolbens, für eine Flüssigkeit zum Bestimmen von Verdampfungseigenschaften der Flüssigkeit gemäß zumindest einem standardisierten Test, aufweisend:
zumindest ein Temperaturmesssystem (101), insbesondere zum Messen einer Dampftemperatur der Flüssigkeit, mit einem Temperaturmessfühler (103) mit einem unteren Ende (105);
einen Verschlussteil (107) mit einer, insbesondere konisch ausgebildeten, Außenoberfläche (109), die zum Kontaktieren einer, insbesondere inneren, Oberfläche (116) einer Öffnung des Behälters (110) zum Verschließen des Behälters ausgebildet ist und mit einer Durchgangsöffnung (111), durch die ein Teil des Temperaturmessfühlers (103) derart geführt ist, dass das untere Ende (105) des Temperaturmessfühlers (103) innerhalb (114) des Behälters (110) angeordnet ist;
einen Mechanismus, insbesondere Schraubmechanismus (113), zum Verstellen einer Position des unteren Endes (105) des Temperaturmessfühlers (103) entlang einer Längsrichtung (115) des Temperaturmessfühlers;
einen oberhalb des Verschlussteils (107) quer zur Längsrichtung des Temperaturmessfühlers (103) über den Verschlussteil (107) und/oder einen Mittelteil (117) hervorragenden Stützteil (133), der mit einem Gegenstück (277) einer Hilfsvorrichtung ineinanderschiebbar ist, wobei der Stützteil oder das Gegenstück als Steckelement und der Stützteil oder das Gegenstück als hülsenförmiges Element ausgeführt sind.

2. Vorrichtung gemäß dem vorangehenden Anspruch, wobei durch Betätigung des Mechanismus die Position (h) des unteren Endes (105) des Temperaturmessfühlers (103) entlang der Längsrichtung (115) des Temperaturmessfühlers veränderbar ist.

3. Vorrichtung gemäß einem der vorhergehenden Ansprüche, wobei der Mechanismus (113) zum Verstellen einer Position des unteren Endes (105) des Temperaturmessfühlers (103) entlang einer Längsrichtung (115) des Temperaturmessfühlers einen Schraubmechanismus (113) umfasst, wobei der Schraubmechanismus (113) insbesondere ein Schraubelement mit einem Schraubgewinde aufweist, wobei durch Umdrehung des Schraubelements um eine Schraubachse die Position (h) des Temperaturmessfühlers verstellbar ist.

4. Vorrichtung gemäß einem der vorangehenden Ansprüche,
ferner aufweisend:
einen Mittelteil (117) mit einem Innenraum (119), wobei in dem Innenraum (119) ein oberes Ende (257) des Temperaturmessfühlers (203) angeordnet ist; und
eine Kappe (123) zum Verschließen des Innenraums (119),
wobei der Mittelteil zwischen dem Verschlussteil und der Kappe angeordnet ist, wobei die Kappe (123, 223, 323) insbesondere ein als Durchgangsloch oder Sackloch ausgebildetes Innengewinde aufweist.

5. Vorrichtung gemäß einem der vorangehenden Ansprüche, wobei die Kappe (323) das Schraubelement bildet, wobei in das Innengewinde (328) der Kappe (323) ein oberes Ende (330) des Temperaturmessfühlers (303) mit einem Außengewinde eingeschraubt ist.

6. Vorrichtung gemäß einem der vorangehenden Ansprüche 1 bis 4, wobei das Schraubelement (247) als eine Schraube (249) mit Außengewinde (251) gebildet ist,
wobei das Innengewinde (253) in der Kappe (223) als Durchgangsgewinde ausgebildet ist, in das die Schraube eingeschraubt ist, um eine nach oben vorgespannte Stirnfläche (257) eines oberen Endes des Temperaturmessfühlers (203) zu kontaktieren,
wobei die Vorspannung insbesondere durch eine Spiralfeder (259) erzeugt ist, durch die der Temperaturmessfühler geführt ist und die sich in einem unteren Ende (261) in dem Mittelteil und an einem oberen Ende (265) an einer Wulst (267) des Temperaturmessfühlers abstützt, um diesen nach oben vorzuspannen.

7. Vorrichtung gemäß einem der vorangehenden Ansprüche, ferner aufweisend:
eine, insbesondere in dem Innenraum des Mittelteils angeordnete, elektronische Schaltung, insbesondere auf einer Leiterplatte (241), die ausgebildet ist, von dem Temperaturmessfühler ausgegebene Messdaten zu verarbeiten, insbesondere in digitale Signale zu konvertieren,
wobei die elektronische Schaltung insbesondere ferner aufweist:
einen elektronischen Speicher für oder mit Kalibrierdaten für den Temperaturmessfühler;
einen A-D-Wandler;
ein Kommunikationsmodul, das ausgebildet ist, digitale Signale drahtlos oder drahtbasiert zu übertragen; und
einen Bezugswiderstand, in Bezug auf welchen ein temperaturabhängiger Widerstand des Temperaturmessfühlers, insbesondere Pt100, ferner insbesondere Metall Pt100, bestimmt wird.

8. Vorrichtung gemäß einem der vorangehenden Ansprüche, wobei das Temperaturmesssystem (101) einen weiteren Temperaturmessfühler (129), insbesondere Thermoelement, umfasst, der durch den Verschlussteil geführt ist und mit seinem unteren Ende (127) eine Temperatur an einem Boden (118) des Behälters (110) zu messen ausgebildet ist,
wobei der weitere Temperaturmessfühler insbesondere:
in der Position einstellbar ist oder
über eine weitere Vorspannfeder (231), insbesondere Spiralfeder, nach unten vorgespannt ist, wobei die weitere Vorspannfeder insbesondere eine weitere Leiterplatte (275), an der der weitere Temperaturmessfühler (229) befestigt ist, nach unten drückt.

9. Vorrichtung gemäß einem der vorangehenden Ansprüche, wobei der Mittelteil zumindest einen oberen Teil des Verschlussteils umgreift und/oder aufnimmt und insbesondere einen elastischen Sprengring (381) aufweist, um bei in die Öffnung des Behälters vollständig eingeschobenem Verschlussteil unterhalb einer nach außen hervortretenden Wulst (382) einer äußeren Öffnungswandung (302) der Öffnung des Behälters einzurasten.

10. Vorrichtung gemäß einem der vorangehenden Ansprüche, wobei der Stützteil (133) zylindersymmetrisch ist,
wobei der Stützteil insbesondere magnetisierbares und/oder magnetisches Material umfasst.

11. Vorrichtung gemäß einem der vorangehenden Ansprüche, ferner aufweisend:
einen Stecker (135) und/oder eine Dose (271), um, insbesondere über ein elektrisches Kabel, eine elektrische Verbindung der elektronischen Schaltung nach außerhalb zu ermöglichen,
wobei der Stecker (135; 271) oder die Dose insbesondere mit dem Stützteil (133; 233) integriert sind.

12. Vorrichtung gemäß dem vorangehenden Anspruch,
wobei der Stecker (335) und/oder die Dose getrennt vom Stützteil (333) am Ende eines Anschlusskabels ausgeführt sind, insbesondere einen Magnetstecker oder -buchse aufweisend.

13. Vorrichtung gemäß einem der vorangehenden Ansprüche, wobei der Verschlussteil aus Teflon gefertigt ist und/oder wobei der Mittelteil aus Nylon gefertigt ist; und
wobei die Vorrichtung ferner aufweist:
zumindest eine Dichtung (379), die zwischen dem Temperaturmessfühler (303) und einer die Durchgangsöffnung (311) begrenzenden Oberfläche im Verschlussteil (307) vorgesehen ist.

14. Flüssigkeitsanalysesystem (150, 550), insbesondere Automatische Destillations-Einheit, zum Analysieren einer Flüssigkeit, insbesondere gemäß zumindest einem standardisierten Test, aufweisend:
einen Behälter (110, 510) mit einer Öffnung, insbesondere mit einem zu einem Kondensator führenden Zweig; und
eine Vorrichtung (100, 200, 300, 500) zum Verschließen eines Behälters gemäß einem der vorangehenden Ansprüche.

15. Flüssigkeitsanalysesystem gemäß dem vorangehenden Anspruch, ferner aufweisend:
eine Stützaufnahme (277), die ausgebildet ist, den Stützteil der Vorrichtung aufzunehmen; und
eine Heizung (143), die angeordnet ist, den Behälter von unten zu heizen; und
ein Steuersystem, das ausgebildet ist, die Heizung anzusteuern und Messdaten von dem Temperaturmesssystem zu erhalten und auszuwerten insbesondere gemäß einem standardisierten Test.

## Claims

1. A device (100, 200, 300) for closing a container (110), in particular a piston, for a liquid for determining evaporation properties of the liquid according to at least one standardized test, comprising:
at least one temperature measuring system (101), in particular for measuring a vapor temperature of the liquid, with a temperature sensor (103) with a lower end (105);
a closure part (107) with a, in particular conically formed, outer surface (109), designed for contacting a, in particular inner, surface (116) of an opening of the container (110) for closing the container with a through opening (111), through which a part of the temperature sensor (103) is guided such that the lower end (105) of the temperature sensor (103) is arranged inside (114) the container (110);
a mechanism, in particular a screw mechanism (113), for adjusting a position of the lower end (105) of the temperature sensor (103) along a longitudinal direction (115) of the temperature sensor;
a support part (133) projecting above the closure part (107) transversely to the longitudinal direction of the temperature sensor (103) over the closure part (107) and/or over a central part (117), which support part (133) is telescopable into one another with a counterpart (277) of an auxiliary device, wherein the support part or the counterpart are formed as plug element and the support part or the counterpart are formed as sleeve shaped element.

2. The device according to the preceding claim, wherein
by actuating the mechanism, the position (h) of the lower end (105) of the temperature sensor (103) along the longitudinal direction (115) of the temperature sensor is changeable.

3. The device according to any of the preceding claims, wherein
the mechanism (113) for adjusting a position of the lower end (105) of the temperature sensor (103) along a longitudinal direction (115) of the temperature sensor comprises a screw mechanism (113), wherein
the screw mechanism (113) comprises in particular a screw element with a screw thread, wherein
by turning the screw element around a screw axis, the position (h) of the temperature sensor is adjustable.

4. The device according to one of the preceding claims, further comprising:
a central part (117) having an interior (119), wherein
in the interior (119) a top end (257) of the temperature sensor (203) is arranged; and
a cap (123) for closing the interior (119), wherein
the central part is arranged between the closure part and the cap, wherein
the cap (123, 223, 323) comprises in particular an internal thread which is formed as through hole or as blind hole.

5. The device according to one of the preceding claims, wherein
the cap (323) forms the screw element, wherein
into the internal thread (328) of the cap (323) there is screwed a top end (330) of the temperature sensor (303) by means of an external thread.

6. The device according to one of the preceding claims 1 to 4, wherein
the screw element (247) is formed as a screw (249) with an external thread (251), wherein
the internal thread (253) in the cap (223) is formed as a through thread, into which the screw is screwed, to contact an upwardly biased front surface (257) of a top end of the temperature sensor (203), wherein
the biasing load is in particular generated by a spiral spring (259) through which the temperature sensor is guided and which supports itself in a lower end (261) in the central part and at a top end (265) on a bead (267) of the temperature sensor in order to upwardly bias the temperature sensor.

7. The device according to one of the preceding claims, further comprising:
a, in particular arranged in the interior of the central part, electronic circuit, in particular on a printed circuit board (241), which is designer to process measurement data output by the temperature sensor, in particular to convert into digital signals, wherein
the electronic circuit in particular further comprises:
an electronic memory for or with calibration data for the temperature sensor;
an A-D converter;
a communication module, which is designed to transmit digital signals in a wireless or wire-based manner; and
a reference resistance, in reference to which a temperature dependent resistance of the temperature sensor, in particular Pt100, further in particular metal Pt100, is determined.

8. The device according to any of the preceding claims, wherein
the temperature measuring system (101) comprises a further temperature sensor (129), in particular a thermocouple, which is guided through the closure part and which is designed to measure with its lower end (127) a temperature at a bottom (118) of the container (110), wherein
the further temperature sensor in particular:
is adjustable in position or
by means of a further biasing spring (231), in particular a spiral spring, is downwardly biased, wherein
the further biasing spring in particular pushes downwards a further circuit board (275), which the further temperature sensor (229) is fixed to.

9. The device according to any of the preceding claims, wherein
the central part embraces and/or receives at least a top part of the closure part and/or and in particular comprises an elastic snap ring (381) for latching, with the closure part fully inserted into the opening of the container, below an outwardly projecting bead (382) of an outer opening wall (302) of the opening of the container.

10. The device according to any of the preceding claims, wherein
the support part (133) is cylinder-symmetrical, wherein
the support part comprises in particular magnetizable and/or magnetic material.

11. The device according to any of the preceding claims, further comprising:
a plug (13S) and/or a socket (271), for enabling, in particular by means of an electrical cable, an electrical connection of the electronic circuit to the outside, wherein
the plug (135; 271) or the socket are in particular integrated with the support part (133; 233).

12. The device according to the previous claim, wherein
the plug (335) and/or the socket is/are formed in a manner separated from the support part (333) at the end of a connecting cable, in particular comprising a magnetic plug or socket.

13. The device according to any of the preceding claims, wherein
the closure part is made of Teflon and/or the middle part is made of nylon; wherein the device further comprises:
at least one seal (379), which is provided between the temperature sensor (303) and a surface in the closure part (307), which surface delimits the through opening (311).

14. A liquid analysis system (150, 550), in particular automatic distillation unit, for analyzing a liquid, in particular according to at least one standardized test, comprising:
a container (110, 510) with an opening, in particular with a branch leading to a capacitor; and
a device (100, 200, 300, 500) for closing a container according to one of the preceding claims.

15. The liquid analysis system according to the preceding claim, further comprising:
a support receptacle (277) which is formed to receive the support part of the device; and
a heater (143) arranged to heat the container from below; and
a control system which is configured to control the heater and to receive and to evaluate measurement data from the temperature measuring system in particular according to a standardized test.

## Revendications

1. Dispositif (100, 200, 300) pour fermer un récipient (110), en particulier un flacon, pour un liquide afin de déterminer les propriétés d'évaporation du liquide selon au moins un essai normalisé, comprenant :
au moins un système (101) de mesure de la température, en particulier pour mesurer une température de vapeur du liquide, comprenant un capteur de température (103) ayant une extrémité inférieure (105) ;
une partie de fermeture (107) avec une surface extérieure (109), en particulier de forme conique, qui est conçue pour venir en contact avec une surface (116), en particulier intérieure, d'une ouverture du récipient (110) afin de fermer le récipient, et avec une ouverture de passage (111) à travers laquelle une partie du capteur de température (103) est guidée de telle manière que l'extrémité inférieure (105) du capteur de température (103) est disposée à l'intérieur (114) du récipient (110) ;
un mécanisme, en particulier un mécanisme à vis (113), pour régler une position de l'extrémité inférieure (105) du capteur de température (103) le long d'une direction longitudinale (115) du capteur de température ;
une partie de support (133) dépassant de la partie de fermeture (107) transversalement à la direction longitudinale du capteur de température (103), au-dessus de la partie de fermeture (107), et/ou d'une partie centrale (117), qui peut être emboîtée avec une pièce correspondante (277) d'un dispositif auxiliaire, la partie de support ou la pièce correspondante étant conçue comme un élément enfichable et la partie de support ou la pièce correspondante étant conçue comme un élément en forme de douille.

2. Dispositif selon la revendication précédente, dans lequel, en actionnant le mécanisme, la position (h) de l'extrémité inférieure (105) du capteur de température (103) est modifiable dans la direction longitudinale (115) du capteur de température.

3. Dispositif selon l'une des revendications précédentes, dans lequel le mécanisme (113) pour régler une position de l'extrémité inférieure (105) du capteur de température (103) le long d'une direction longitudinale (115) du capteur de température comprend un mécanisme à vis (113), le mécanisme à vis (113) comprenant en particulier un élément formant vis avec un filetage, la position (h) du capteur de température étant apte à être réglée en tournant l'élément formant vis autour d'un axe de vis.

4. Dispositif selon l'une des revendications précédentes, comprenant en outre :
une partie centrale (117) ayant un espace intérieur (119), une extrémité supérieure (257) du capteur de température (203) étant disposée dans l'espace intérieur (119) ; et
un capuchon (123) pour fermer l'espace intérieur (119), la partie centrale étant disposée entre la partie de fermeture et le capuchon, le capuchon (123, 223, 323) ayant notamment un filetage intérieur aménagé sous la forme d'un trou traversant ou un trou borgne.

5. Dispositif selon l'une des revendications précédentes, dans lequel le capuchon (323) constitue l'élément formant vis, une extrémité supérieure (330) du capteur de température (303) étant vissée, au moyen d'un filetage extérieur, dans le filetage intérieur (328) du capuchon (323).

6. Dispositif selon l'une des revendications précédentes 1 à 4, dans lequel l'élément formant vis (247) est sous la forme d'une vis (249) avec un filetage extérieur (251),
le filetage intérieur (253) étant aménagé dans le capuchon (223) sous la forme d'un filetage traversant dans lequel la vis est vissée afin d'entrer en contact avec une face d'extrémité (257) d'une extrémité supérieure du capteur de température (203) qui est pressée vers le haut,
la pression étant produite en particulier par un ressort hélicoïdal (259) à travers lequel le capteur de température est guidé et qui s'appuie à une extrémité inférieure (261) dans la partie centrale et à une extrémité supérieure (265) sur un bourrelet (267) du capteur de température afin de presser ce dernier vers le haut.

7. Dispositif selon l'une des revendications précédentes, comprenant en outre :
un circuit électronique, situé en particulier sur une carte à circuit imprimé (241), disposé en particulier dans l'espace intérieur de la partie centrale, qui est adapté pour traiter les données de mesure fournies par le capteur de température, en particulier pour les convertir en signaux numériques,
le circuit électronique comprenant en outre, en particulier :
une mémoire électronique pour les données d'étalonnage du capteur de température ou incluant ces données ;
un convertisseur A-N ;
un module de communication adapté à la transmission de signaux numériques sans fil ou en filaire ; et
une résistance de référence, par rapport à laquelle on détermine une résistance du capteur de température dépendant de la température, en particulier la Pt100, plus particulièrement la Pt100 métallique.

8. Dispositif selon l'une des revendications précédentes, dans lequel le système (101) de mesure de la température comprend un autre capteur de température (129), en particulier un thermocouple, qui est guidé à travers la partie de fermeture et est adapté pour mesurer une température au fond (118) du récipient (110) avec son extrémité inférieure (127),
ledit autre capteur de température, en particulier :
étant réglable en position ou
étant sollicité vers le bas par un autre ressort de sollicitation (231), en particulier un ressort hélicoïdal, ledit autre ressort de sollicitation poussant vers le bas en particulier une autre carte à circuit imprimé (275) sur laquelle est fixé l'autre capteur de température (229).

9. Dispositif selon l'une des revendications précédentes, dans lequel la partie centrale entoure et/ou reçoit au moins une partie supérieure de la partie de fermeture et présente en particulier un anneau élastique d'encliquetage (381) afin de s'encliqueter en-dessous d'un bourrelet (382) faisant saillie vers l'extérieur d'une paroi d'ouverture extérieure (302) de l'ouverture du récipient lorsque la partie de fermeture est complètement insérée dans l'ouverture du récipient.

10. Dispositif selon l'une des revendications précédentes, dans lequel la partie de support (133) est de forme cylindrique symétrique,
la partie de support comprenant notamment un matériau magnétisable et/ou magnétique.

11. Dispositif selon l'une des revendications précédentes, comprenant en outre :
une fiche (135) et/ou une prise (271) pour permettre le raccordement électrique du circuit électronique vers l'extérieur, notamment par un câble électrique,
la fiche (135 ; 271) ou la prise étant notamment intégrée à la partie de support (133 ; 233).

12. Dispositif selon la revendication précédente,
dans lequel la fiche (335) et/ou la prise sont réalisées séparément de la partie de support (333) à l'extrémité d'un câble de connexion, comprenant notamment une fiche ou une prise magnétique.

13. Dispositif selon l'une des revendications précédentes, dans lequel la partie de fermeture est en téflon et/ou dans lequel la partie centrale est en nylon ; et
dans lequel le dispositif comprend en outre :
au moins un joint (379) est prévu entre le capteur de température (303) et une surface dans la partie de fermeture (307) délimitant l'ouverture de passage (311).

14. Système d'analyse de liquide (150, 550), en particulier unité de distillation automatique, pour analyser un liquide, notamment selon au moins un test normalisé, comprenant :
un conteneur (110, 510) avec une ouverture, en particulier avec une branche menant à un condenseur ; et
un dispositif (100, 200, 300, 500) pour fermer un conteneur selon l'une des revendications précédentes.

15. Système d'analyse de liquide selon la revendication précédente, comprenant en outre :
un récepteur de support (277) adapté pour recevoir la partie de support que comprend le dispositif ; et
un chauffage (143) disposé de manière à chauffer le conteneur par le bas ; et
un système de commande adapté pour commander le chauffage et pour recevoir et évaluer les données de mesure du système de mesure de la température, en particulier selon un test normalisé.
